# EUROPEAN PATENT SPECIFICATION

(11) **EP 4 244 790 B1**
(45) Date of publication and mention of the grant of the patent: **09.07.2025**
(21) Application number: 22757534.7
(22) Date of filing: 25.07.2022
(51) Int. Cl.: G06Q 10/08, H04W 4/38, H04W 88/16, H04W 12/03, H04W 4/35, G06Q 10/00

(54) **METHOD AND SYSTEM FOR MONITORING A SET OF PERISHABLE PRODUCTS**
VERFAHREN UND SYSTEM ZUR ÜBERWACHUNG EINES SATZES VERDERBLICHER PRODUKTE
PROCÉDÉ ET SYSTÈME DE SURVEILLANCE D'UN ENSEMBLE DE PRODUITS PÉRISSABLES

(30) Priority: 26.07.2021 CH 0701002021
(43) Date of publication of application: 20.09.2023
(73) Proprietor: Berlinger & Co. AG, 9608 Ganterschwil (CH)
(72) Inventor: SCHELL, Roger, 9650 Nesslau (CH); WEBER, Manuel, 5400 Baden (CH); BEER, Marina, 6883 Au (AT); VAN HOESEL, Lodewijk, 9608 Ganterschwil (CH)
(74) Representative: Dehns
(86) International application number: PCT/EP2022/070781
(87) International publication number: WO 2023/006658

(56) References cited:
- US-A1- 2006 168 644
- US-A1- 2021 125 143

## Description

The invention relates to the field of monitoring products, in particular of monitoring products which are sensitive to physical and/or environmental conditions, such as pharmaceutical products. More specifically, it relates to the monitoring of the integrity (intactness / soundness) of products using tags (such as data loggers). In particular, the invention relates to monitoring a set of products, such as a set of products which are transported together or a set of products which are stored together. The monitoring can take place, e.g., during said transporting and during said storing, respectively.

The invention relates to methods and apparatuses (systems, combinations, devices...) according to the opening clauses of the claims. It can find application, e.g., in cold chain monitoring.

From EP3017402 is known a tag (data logger) for monitoring the integrity of a product in a syringe. The tag comprises a display unit comprising a display for displaying data relating to said integrity.

US 2006/168644 A1 discloses a radio frequency identification (RFID) transponder comprising a memory storing a destination address identifying a location on the Internet corresponding to the RFID transponder. The Internet address further comprises a Uniform Resource Locator (URL). In an embodiment, a computer network comprises a client computer having an application executing thereon, an RFID tag having a memory containing an Internet address corresponding to the RFID tag, and an RFID reader connected to the client computer and adapted to communicate with the RFID tag. The RFID reader recovers the Internet address from the RFID tag and provides the Internet address to the client computer. The client computer thereby communicates with the location defined by the Internet address corresponding to the RFID tag using the application. A host server is connected to the client computer, and to the Internet. The client computer thereby can access the Internet location by operation of the application through the host server.

The paper "Pharmaceutical cold chain management: Platform based an a distributed ledger" (Hulea Mihai et al.), IEEE 2018 describes a solution for pharmaceutical cold chain management using distributed ledger technologies. An application framework is described for shipment tracking which will deliver information to all stakeholders during the distribution phase of pharmaceutical products. The solution is based on Hyperledger Sawtooth distributed ledger framework, which has been extended with a custom transactions family and a sensors gateway for automatically collecting data from temperature tracking devices.

EP 3 534 310 A1 discloses a system for managing the lifecycle of each of a plurality of containers remotely located from one or more servers. The system comprises a first database defining information for managing the lifecycles of the containers. Each of the containers has a sensor device physically coupled thereto. The system includes one or more container management components communicatively coupled to, and remotely located from, the one or more servers, and each container management component manages, at least in part, a lifecycle of one or more of the containers based at least in part on the information defined in the first database. At least one of the container management components is included in a sensor device physically coupled to containers. And the sensor device is in direct communication with at least one of the one or more servers.

US 2016/0379163 A1 discloses an apparatus for tracking a shipment which includes an Internet of Things (IoT) gateway that includes a communications link to an loT infrastructure and a communications link to a number of IoT devices. Each of the IoT devices is disposed proximate to an asset, and includes a communications link to the IoT gateway.

US 2016/0094421 A1 discloses a method and mechanism to implement a unified infrastructure for handling IoT (Internet of Things) components and devices. A platform is provided to integrate, access, and control any type of local device, and to use any type of back-end application to processed collected data from the local devices.

It can be advantageous to communicate to the internet measurement data comprising data related to sensed physical and/or environmental conditions to which a product (presumably) has been exposed, as generated by a corresponding sensor-bearing tag; in particular one can do so already during the monitoring, such as during the transporting or the storing of the product.

This way, the measurement data can be saved in a well-defined and safe location, such as in a server system connected to the internet. Accordingly, measurement data from the tag, which have been transmitted to the internet and server system, respectively, are preserved, even in case of, e.g., of loss of the tag.

And access can be provided to the measurement data from virtually anywhere, and in particular from locations remote from the product. This way, it is not necessary to be close to the tag and the product, respectively, in order to learn about the integrity of the product. It is, in this way, possible to practically realize real-time monitoring.

Also, this makes possible, in a simple fashion, to extend the monitoring (and optionally also the processing / evaluating) in such a way that one and the same product (or set of products) can be (centrally) monitored even if different systems and/or devices are used at different times, such as at an initital storage, during a subsequent transport and during a final storage.

And an analysis conerning specific transport lanes or specific storage locations can be accomplished in a relatively simple way, such as by gathering data from two or more different systems and/or devices which happen to be simultaneously in use on the same transport lane or in the same storage location.

And it is also possible to interrelate the data with further data, such as with data relating to the weather and/or to (road; water; air) traffic.

Furthermore, processing of the measurement data, such as for evaluation of the data, e.g., for determining whether or not the product can be assumed to be still intact or not, can be accomplished "in the cloud", i.e. using a server system connected to the internet. This way, such data processing not necessarily has to be accomplished by the tag itself, such that it can be constructed in a simpler and more cost-effective way. And also the tag's power consumption can be lower, such that the tag's energy source (e.g., battery) can be smaller dimensioned.

Thus, it makes sense to contemplate a tag comprising one or more sensors and having internet connectivity for transmitting to the internet measurement data comprising data related to the physical and/or environmental conditions sensed by the one or more sensors.

This way, the advantages sketched above can be achieved. And it is furthermore sufficient to use (and manufacture) a single type of tags only - at least when disregarding possible demands for different sensors in different tags.

However, the inventors thought further and contemplated an improved way of monitoring products, more particularly, of monitoring a set of products. They contemplated that it can be advantageous to use two different types of devices for monitoring a set of products, wherein a device of a first type (first device) comprises a sensing unit (comprising one or more sensors) and a device of a second type (second device) has internet connectivity - in contrast to the first device. And a first device can communicate with a second device - via a communication network (first communication network) which is different from the communication network providing the internet connectivity (second communication network). This way, many first devices can communicate data, such as data originating from their respective sensing unit, via a second device to the internet. Accordingly, the first devices can be relatively small and cost-efficient, since they can be devoid of hardware and of software for transmitting data to the internet.

Thus, instead of using many device having a sensor unit and internet connectivity, it is proposed to introduce first and second device, wherein the first devices can communicate - via a first communication network, such as according to a "Bluetooth Low-Energy" standard -with second devices; and only the second devices can transmit data to the internet - via a second communication network, such as according to a "WiFi" standard or using a cellular communication network. The second devices each can function as a gateway to the internet for one or more of the first devices.

The second devices are, in some implementations, devoid of a sensing unit for monitoring physical and/or environmental conditions; and in some other implementations, also the second device each comprise a sensing unit for monitoring physical and/or environmental conditions.

In particular when many products have to be separately monitored or when otherwise several sensors need to be located in different locations of the set of products, the proposed use of a large number of the relatively simple first device together with a small number of second devices can be a very cost-effective way of monitoring the set of products.

Another example of a possible advantage of a version of the invention is to make possible a secure handling of data related to sensing results.

Another example of a possible advantage of a version of the invention is to make possible a tamper-proof handling of data related to sensing results.

Another example of a possible advantage of a version of the invention is to enable communication, in particular transmission, of data from a first device beyond a range over which the first device itself can communicate.

Another example of a possible advantage of a version of the invention is to make possible a particularly robust handling of data related to sensing results, in particular to enable access to data related to sensing results even in difficult situations such as when second devices have technical defects and/or when access to the internet via second devices is not possible.

Further objects and advantages emerge from the description and embodiments above and below.

At least one of these objects or these advantages is at least partially achieved by apparatuses (e.g., systems; devices) and methods according to the patent claims.

In particular, the method for monitoring a set of products, can comprise
- providing one or more first devices, each of the first devices
   - being associated with and, in particular, also located in proximity to a respective subset of the products;
   - comprising a first sensing unit comprising one or more sensors; and
   - optionally, a first storage unit;
- providing one or more second devices, in particular two or more second devices;
- by means of each of the first devices:
   - sensing, by means of the respective one or more sensors, physical and/or environmental conditions to which the respective subset of products is assumed to be exposed;
   - generating respective measurement data comprising data related to the sensed physical and/or environmental conditions;
   - transmitting a first data set comprising the measurement data via a first communication network one of the second devices;
- each of the second devices
   - receiving one or more of the first data sets via the first communication network;
   - deriving from the each of the so-received first data sets a respective second data set; and
   - transmitting each of the second data sets via a second communication network to the internet.

This can effect a high cost-effectiveness, in particular when sensors and first devices, respectively, need to be positioned in many different locations (at or near the set of products).

In a particular view, the method can be considered a method for monitoring a status, in particular an integrity, of a set of products, as assessed from an exposure of the products to physical and/or environmental conditions. Said integrity can in this regard refer to an intactness or soundness of the respective products. For each of the subsets, the respective status (or integrity) is monitored - namely by the respective first device.

The system can in particular be a system for monitoring a set of products, which can comprise
- one or more first devices, each of the first devices being associated with a respective subset of the products;
- one or more second devices;

each of the first devices comprising first functional units, the first functional units comprising
   - a first sensing unit comprising one or more sensors for sensing physical and/or environmental conditions to which the respective subset of products is assumed to be exposed;
   - a first communication unit for communicating via a first communication network; and optionally
   - a first storage unit for data storage;
each of the second devices comprising one or more second functional units, the second functional units comprising
   - a second communication unit for communicating via the first communication network and, in addition, for communicating via a second communication network;
wherein each of the first devices is configured
   - to generate measurement data comprising data related to the sensed physical and/or environmental conditions;
   - to transmit a first data set comprising the measurement data via the first communication network;
wherein each of the second devices is configured
   - to receive via the first communication network one or more of the first data sets transmitted by respective ones of the first devices via the first communication network;
   - to derive from the each of the so-received first data sets a respective second data set; and
   - to transmit each of the second data sets via the second communication network to the internet.

The system can, in a particular view, be considered a combination (combination of parts).

Generally, the method and the system can have analoguous features and therefore also corresponding technical effects and advantages.

The invention can further comprise a method for storing a set of products, which comprises monitoring the set of products according to the described method; and a method for shipping a set of products, which comprises monitoring the set of products according to the described method.

And the invention can also comprise a shipping unit comprising the described system and further comprising the set of products, in particular wherein each of the first devices is positioned in proximity to the products of the associated subset; and also a stock (e.g., stock of products; inventory) comprising the described system and further comprising a set of products, in particular wherein each of the first devices is positioned in proximity to the products of the associated subset.

Accordingly, also the system can effect a high cost-effectiveness, in particular when sensors and first devices, respectively, need to be positioned in many different locations (at or near the set of products). And, in a particular view, the system can be considered a system for monitoring a status, in particular an integrity, of a set of products as assessed from an exposure of the products to physical and/or environmental conditions.

In some embodiments, each second device comprises a sensing unit (second sensing unit) comprising one or more sensors for sensing physical and/or environmental conditions. More particularly, each of the second devices can be associated with a respective subset of the products, and the second sensing unit can comprise one or more sensors for sensing physical and/or environmental conditions to which the respective subset of products is assumed to be exposed. Each of the second devices can be associated with and, in particular, can also be located in proximity to the respective subset of the products.

The physical and/or environmental conditions usually comprise one or more of
- temperature;
- humidity;
- acceleration;
- pressure, in particular ambient pressure
- light intensity.

Correspondingly, each of the one or more sensors can be, e.g.,
- a temperature sensor;
- a humidity sensor;
- an acceleration sensor;
- a pressure sensor, in particular ambient pressure sensor; or
- a light intensity sensor.

The monitoring can in particular be accomplished during a time span, such as during a time of transport of the set of products from a location of departure to a destination; or during storage of the products in a storage location, e.g., from a time when the products enter the storage location to a time when the products leave the storage location.

The set of products can be, e.g., a plurality of products which are stored together or a plurality of products which are transported together. The storing and transporting can, e.g., take place in a temperature-controlled environment, e.g., in a cooled environment.

The option of locating each first device in proximity to its respective associated subset of the products can lead to an improved accuracy of the assessment of the physical and/or environmental conditions to which the respective subset of the products is exposed, based on the result of the sensing.

The method can, in instances, also be considered a method for cold-chain monitoring of a set of products.

The products can in particular be perishable products, e.g temperature-sensitive products.

The products can be, e.g., temperature-sensitive and/or humidity-sensitive and/or shock-sensitive and/or light-sensitive.

The products can in particular be, e.g., pharmaceuticals or samples taken from a human body or from human body waste, or samples taken from an animal body or from animal body waste..

Each first device can thus be associated to one or more of the products (forming the subset of the products). The physical and/or environmental conditions sensed by a first device can be attributed to the respective associated (or assigned) products. The respective subsets can be, but need not be, disjunct, i.e. they can be overlapping. A subset can comprise or or more of the products.

Typically, none of the subsets is identical to the set.

In some embodiments, each first device comprises a housing and, more specifically, its first functional units can each be arranged in a fix position with respect to the housing - with the optional exception that a portion of the first sensing unit can be arranged externally to the housing. Said portion of the first sensing unit can comprise, e.g., one or more of the sensors (external sensors) of the first sensing unit.

In some embodiments, each second device comprises a housing and, more specifically, its second functional units can each be arranged in a fix position with respect to the housing - with the optional exception that a portion of a second sensing unit (if comprised in the second device) can be arranged externally to the housing. Said portion of the second sensing unit can comprise, e.g., one or more sensors of the second sensing unit.

The first devices and second devices are separate devices, e.g., each first device and also each second device have its own, separate housing.

The measurement data can more particularly comprise data which are derived from the sensed physical and/or environmental conditions, e.g., which are indicative of or are representing (representative of) the sensed physical and/or environmental conditions.

The measurement data can comprise data which are equivalent to the sensing results.

The measurement data can comprise, e.g., raw sensing data or processed sensing data. In the latter case, the first devices can be capable of processing data, such as processing raw sensing data to obtain processed sensing data.

In some embodiments, each of the second data sets comprises, in particular in encrypted form, time stamp data related to a time at which the sensing of the physical and/or environmental conditions by the one or more sensors of the respective first device has taken place. In particular, time stamp data can be derived (by the second devices) from a received first data set.

In some embodiments, the time stamp data are comprised in the measurement data, in particular in encrypted form, the measurement data being encrypted data. In other words, the data related to the sensed physical and/or environmental conditions, together with the time stamp data, are encrypted. Thus, the measurement data can be considered to comprise time-stamped data related to the sensed physical and/or environmental conditions (e.g., time-stamped measurement data).

The measurement data are, in some embodiments, encrypted data, e.g., binary data obtained by digitally encrypting data comprising data related to the sensed physical and/or environmental conditions, e.g., using digital key data. This can make the communication more tamper-proof, in particular the communication between the respective first device and the internet and the server, respectively. E.g., access to the measurement data by any of the second devices can be inhibited (prevented) this way, such as when the second devices are devoid of means which would be configured for decrypting the measurement data.

Typically, each of the first devices is associated with, in particular is temporarily associated with at least one second device, and transmits its first data set to one of the second devices it is associated with. The association between first and second devices can in particular comprise that the respective first device and the respective second device can communicate with one another via the first communication network. This can, for example, depend on whether or not the two devices are located such that the effective range of the first network is sufficient to enable a communication between the two devices via the first network.

In instances, each first device can transmit a respective first data set to one of the second devices only which furthermore is different from all second devices to which any other one of the first devices can transmit its respective first data set; but usually several ones of the first devices are able to transmit their respective first data sets to one and the same second device.

In some embodiments, two or more second devices are provided, and at least one of the one or more first devices transmits, via the first communication network, one first data set to one of the two or more second devices and transmits another first data set to another one of the two or more second devices. More specifically, whether the first device transmits a first data set to the one or to the other of the two or more second devices depends on circumstances. In other words, the association of the first device with the one or with the other, respectively, of the two or more second devices can change with time. And this can take place, e.g., according to availability of the second devices to the first device (e.g., nearness; access to the first communication network; defect-freeness) and/or to the ability of the respective second device to communicate via the second communication network.

Having the possibility to transmit first data sets to two or more different second devices can better ensure the transmission, in particular a timely transmission, of measurement data to the internet and to the server, respectively, in particular when one of the second devices has a technical defect and/or is - temporarily - unable to access or communicate via the second communication network. This makes the method (and the system) more robust.

Accordingly, in terms of the system, in some embodimentss, the system comprises two or more second devices, and at least one of the one or more first devices is configured to transmit the first data set via the first communication network either to one of the second devices or to another one of the second devices, depending on circumstances.

Typically, each of the second devices receives a plurality of the first data sets via the first communication network, which can be transmitted by one and the same or rather by several ones of the first devices. Unless, only a single second device is provided (the system comprising merely a single second device), each second device usually receives merely a fraction (a portion) of the first data sets.

The deriving of the second data sets can be a trivial process: Each of the second data sets can be identical to the first data set from which is has been (identically) derived. However, this is merely an option, but an option which can simplify or reduce the tasks to be carried out by the second devices. Generally (and typically), a second data set can differ from the first data set from which it has been derived, e.g., the second data set can comprise further data; or can comprise an altered version of data contained in the first data set.

Each of the second data sets can, in particular, comprise data related to the sensed physical and/or environmental conditions, e.g., data which are indicative of or are representing the sensed physical and/or environmental conditions. In particular, each of the second data set can comprise the measurement data.

Thus, in some embodiments, the second device derives the measurement data in a trivial way from the first data set; in other words, the second data sets, too, comprise the respective measurement data.

Each of the second data sets can comprise data derived from the sensed physical and/or environmental conditions.

As indicated above already, in some embodiments, each of the second data sets comprises the measurement data as received via the first communication network from the respective first device, i.e. comprises the identical (unchanged) measurement data. E.g., each second device can be configured to be incapable of modifying the measurement data received via the first communication network from a respective first device. In other words, each second device can be devoid of means for modifying the measurement data received via the first communication network from a respective first device. A modification, e.g., processing, of the measurement data by any of the second devices is thus rendered impossible. On the one hand, this makes the method and the system simple, and on the other hand, increased security and tamper-proofness during the transmission of the measurement data to the internet is achieved.

Similarly, in some embodiments, the deriving the second data sets can comprise incorporating the respective measurement data in the respective second data set identically as comprised in the respective received first data set. And, more particularly, the second data set comprises no more than exactly one time the measurement data; i.e. the second data set does not comprise two or more copies or versions (possibly modified ones) of the measurement data.

As mentioned above, the measurement data can be encrypted data, and, as an option, the encryption can prevent (inhibit) a modification of the measurement data by any of the second devices.

The transmitting of the second data sets via a second communication network to the internet can in particular comprise communicating via a TCP/IP protocol, i.e. via a protocol of the internet protocol suite (also known as the TCP/IP protocol suite). For example, it can comprise communicating using the Transmission Control Protocol (TCP), the User Datagram Protocol (UDP) or the Stream Control Transmission Protocol (SCTP). The second devices (and more particularly, the second communication units) can, accordingly, comprise means for communicating via a TCP/IP protocol; they can be configured to communicate (via a second communication network) using a TCP/IP protocol.

In contrast thereto, it can be provided that the transmitting of the first data sets is accomplished without communicating via a TCP/IP protocol. It can be provided that the first devices (and more particularly, the first communication units) are devoid of means for communicating via a TCP/IP protocol. This can facilitate constructing the first devices in a relatively simple and cost-effective manner.

In some embodiments, each of the first devices is devoid of a capability to communicate via another communication network than the first communication network.

Typically, a network protocol of the first communication network is different from a network protocol of the second communication network. E.g., communication via the first communication network can be carried out via a protocol according to a "Bluetooth" standard, such as according to a "Bluetooth Low Energy" (BLE) standard, whereas communication via the second communication network can be carried out using a TCP/IP protocol.

In some embodiments, the first communication network is a"Bluetooth" communication network, more particularly a "Bluetooth Low Energy" communication network.

Alternatives to the "Bluetooth" standard are, e.g., the "ZibBee" standard, the "LoRa" (Long Range) standard, the "6LoWPAN" ("IPv6 over Low power Wireless Personal Area Network) standard - which by the way is not comprised in the TCP/IP protocol suite.

In some embodiments, the first and second communcation networks are wireless communcation networks.

In some embodiments, the first communication network operates in a radio frequency range.

In some embodiments, the second communication network operates in a radio frequency range.

Usually both, the first and the second communication networks operate in a radio frequency range.

Network communication via a radio-frequency based communication network can make possible wireless communication at low energy consumption with sufficient data bandwidth and at sufficient range for the purpose, which in particular applies to the first communication network.

In some embodiments, the first communication network has a range which is smaller than a range of the second communication network.

Referring to "ranges" of the communication networks here, we do not refer, e.g., to free-field ranges theoretically achievable at a theoretical maximum emission power and maximum receiver sensitivity, but to free-field ranges achievable with the concrete first and second devices, and in particular at the actual emission powers and receiver sensitivities factually provided by the first and second devices.

In some embodiments, the first communication network has a range smaller than 50 m, in particular smaller than 20 m, more particularly smaller 10 m.

In some embodiments, the second communication network has a range of at least 50 m, in particular of at least 100 m, more particularly ot at least 400 m.

In some embodiments, the second communication network is a cellular network, in particular a mobile phone network.

In some embodiments, the second communication network operates according to a Wi-Fi standard.

In some embodiments, each of the first devices repeatedly (at different points im time) carries out the steps of
- sensing, by means of the respective one or more sensors, physical and/or environmental conditions to which the respective subset of products is assumed to be exposed;
- generating respective measurement data comprising data related to the sensed physical and/or environmental conditions;
- transmitting a first data set comprising the measurement data via the first communication network to one of the second devices.

The generating of the measurement data can comprise including the time stamp data (mentioned above) in the measurement data.

In some embodiments, the method comprises positioning each of the first devices in proximity to the products of the associated subset.

In some embodiments, each of the first devices comprises a first storage unit and is configured to store in its first storage data related to the sensed physical and/or environmental conditions, e.g., the measurement data. This makes possible to preserve these important data also in the respective device.

The first storage units can be, e.g., digital data storages, such as computer memory chips.

In some embodiments, the functional units comprise a data output unit comprising a hardware connector, configured to enable an output of a copy of the first data set via the hardware connector, in particular when an external device is connected to the hardware connector, e.g., via a cable. This provides an additional way of transmitting the first data set and thus the measurement data, which can provide an alternative way of transmitting the measurement data to the internet and to the server, respectively. Such an alternative can be very valuable, e.g., when the set of products or at least the first devices and the second devices are located in a region where there is no access to the internet, at least not via the second communication network. The external device can be, e.g., a smartphone or a computer or another computing device, and it can be used to transmit the first data set to the internet and to the server, respectively, using a different path, the path distinguishing from the before-described path of: first communication network → second communication network → internet / server. The path can comprise: first device → (via hardware connector) external device → internet / server. The external device, accordingly, can have access to the internet, and a user can transmit the first data set (more precisely, the copy thereof) to the internet and to the server, respectively, using the external device.

Having such a possibility of outputting copies of first data sets to an external device, via the hardware connector, can better ensure the transmission, in particular a timely transmission, of measurement data to the internet and to the server, respectively. This can be useful in particular when one or more of the second devices has a technical defect and/or is - temporarily - unable to access or communicate via the second network connection. This makes the system (and the method) more robust.

Of course, embodiments with the data output unit can be well combined with embodiments where the measurement data are encrypted data, as this provides protection for the measurement data, increasing tamper-proofness.

Similarly, in the method, each of the first devices comprises a data output unit comprising a hardware connector, and the method comprises, by at least one of the first devices:
- outputting of a copy of the first data set via the hardware connector.

The method can in particular comprise:
- a user connecting an external device to the hardware connector, e.g., via a cable;
- the user controlling the data output unit to output a copy of the first data set via the hardware connector to the external device;
- the user transmitting the first data set or a data set derived from the first data set, in particular a data set comprising the measurement data, from the external device to the internet and to the server, respectively.

In some embodiments, the data output unit comprises an interface according to a USB ("universal serial bus") standard, e.g., according to a USB2 or USB3 standard. The hardware connector can be, e.g., a USB connector.

A file transfer of the described kind (using the hardware connector) can be very useful in difficult situations, in order to ensure a transmission of the measurement data to the internet / server despite of technical problems.

In some embodiments, each of the first devices comprises a first energy supply unit comprising a first energy storage, for providing electric energy; in particular for supplying the first functional units with electric energy; and each of the second devices comprises a second energy supply unit comprising a second energy storage, for providing electric energy; in particular for supplying the one or more second functional units with electric energy.

The first energy storage can comprise, e.g., battery.

The second energy storage can comprise, e.g., battery.

In some embodiments, each of the second devices comprises a second energy supply unit comprising a rechargeable second energy storage, e.g., comprising a rechargeable battery.

In some embodiments, each of the first devices comprises a first energy supply unit comprising a non-rechargeable first energy storage, e.g., comprising a non-rechargeable battery. More particularly, for each of the first devices, all first energy storages of all of its first energy supply units are devoid of a rechargeable (first) energy storage.

In some embodiments, a storage capacity of the first energy storage is smaller than a storage capacity of the second energy storage, in particular wherein it amounts to less than 50% of, more particularly less than 25% of the storage capacity of the second energy storage.

In some embodiments, generating the measurement data comprises carrying out an encryption step, and the measurement data, consequently, are encrypted data. This can enable a secure transmission of the measurement data and thus of data related to the sensing results. E.g., symmetric encryption can be implemented. This way is one possible way of preventing (inhibiting) that a second device to which a first device has transmitted a first data set can modify the measurement data received in the first data set, such that the identical (unmodified) measurement data are transmitted by the second device, in the second data set, to the internet and to the server, respectively.In some embodiments, encryption data (such as digital key data) used for the generation of the encrypted measurement data are unique to each of the first devices. This way, e.g., digital key data specific for a specific first device cannot be used for decrypting data, e.g., measurement data, encrypted by a different first device.

In some embodiments, each of the second data sets comprises, derived from the respective first data set, device ID data identifying the respective first device. This way, it is possible to find out from which one of the first devices the first and the second data set, respectively, did originate.

In particular, the device ID data uniquely identify the respective first device. Being a unique identifier, the device ID data enable an unambiguous identification of each individial first device.

In some embodiments, the device ID data are comprised in the second data sets in an unencrypted form. This way, they can be used, e.g., as a part of URL data which will be described in more detail below.

In some embodiments, the device ID data are comprised in the second data sets in an encrypted form, in particular they can be comprised in the measurement data, the measurement data being encrypted data. In other words, the data related to the sensed physical and/or environmental conditions, together with the device ID data, are, in this case, encrypted. Of course, the encrypted measurement data can also, in addition comprise the time stamp data as mentioned above.

This protects also the device ID data from fraud and makes possible to identify from the encrypted measurement data (and thus in a secure way) the individual first device from which the measurement data did originate.

In some embodiments, the device ID data are comprised in the second data sets in an encrypted form and in an unencrypted form. This combines the advantages of the two forms of storing the device ID data.

In some embodiments, the second device derives the device ID data in a trivial way from the first data set; in other words, the first data sets, too, comprise the respective device ID data.

In some other embodiments, however, the second device derives the device ID data from precursor data comprised in the respective first data set which are not identical to the device ID data. Usually however, the precursor data comprise the device ID data or comprise data equivalent to the device ID data.

In some embodiments, the device ID data or, optionally precursor data (comprising the device ID data or comprising data equivalent to the device ID data), are comprised in the first data sets in an unencrypted form. This way, the second devices need not be able to decrypt data in order to read the device ID data. Thus, the second devices can quickly and easily access the device ID data (or precursor data), e.g., as will be explained below, for deriving URL data.

In some embodiments, the system further comprises a server system connected to the internet and a server application running on the server system, wherein each of the second devices is configured such that the transmitting of the second data sets via the second communication network to the internet comprises
- transmitting the second data sets via the second communication network to the server system; and
   wherein, the server system is configured
- to receive each of the second data sets from each of the second devices.

The server system can be, e.g., one or more interconnected computers, usually including one or more mass storage devices.

It can furthermore be provided that the server application is configured, for each of the received second data sets,
- to retrieve, by the aid of the device ID data comprised in the second data set, decryption data;
- to decrypt the measurement data comprised in the second data set using the decryption data; and
- to store, e.g., on the server system, at least a portion of the decrypted measurement data.

Correspondingly, in some embodiments the generating of the measurement data comprises carrying out an encryption step, and the measurement data are encrypted data, and each of the second data sets comprises, derived from the respective first data set, device ID data identifying the respective first device. And the method can further comprise
- receiving each of the second data sets by a server system connected to the internet, a server application running on the server system; and
   the server application, for each received second data set,
- retrieving, by the aid of the device ID data comprised in the respective second data set, decryption data; and
- decrypting the measurement data comprised in the second data set by the aid of the decryption data; and
- storing, in particular on the server system, at least a portion of the decrypted measurement data.

Thus, the device ID data can be used in a decryption process, in particular in a process for decrypting encrypted data associated with the respective first device identified by the device ID data, such as in a process for decrypting respective measurement data (comprised in a respective second data set).

Encryption can provide tamper proofness and secure transmission of data, such as of the second data set. An end-to-end encrpytion (from the first devices to the server application) can be implemented.

The decryption data can comprise digital key data ("key").

In some embodiments, symmetrical encryption is implemented. In other words, one and the same key is used (i.e. identical digital key data are used) for encryption (by the respective first device) and for decryption (by, e.g., the server application).

The encrypted data, such as the encrypted measurement data, can be, e.g., binary data.

The retrieving of the decryption data can be accomplished, e.g., using a lookup table.

For example, for each device ID data, the server application finds, via the lookup table, the digital key data associated with the first device identified by the device ID data and thus asscociated with the measurement data comprised in the respective second data set.

Accordingly, for each first device can apply, that all the measurement data generated by the respective first device can be decrypted using (and, optionally, have been generated comprising an encryption step using) one and the same decryption data, e.g., one and the same digital key data.

The decryption data are usually unique to each one of the first devices.

By the server system, the second data set and in particular the measurement data may be stored and/or processed, such as, e.g., for determining whether or not the product can be assumed to be still intact or not. This way, the first devices can do with relatively little processing power, so that they can be simple and cost-effective devices.

In some embodiments, each of the second data sets comprises, derived from the respective first data set, URL data comprising uniform resource locator data identifying an internet resource, and wherein each of the second devices is configured such that the transmitting of the second data sets via the second communication network to the internet comprises
- transmitting each of the second data sets to the internet resource identified by the URL data comprised in the respective second data set.

In particular, a resource associated with the server system can be identified by the URL data, and/or the internet resource can be a resource associated with the server system.

For example, the URL data can comprise an IP address of the server system, e.g., according to an http- or https-protocol; they can comprise data characterizing the internet domain of the server system.

In some embodiments, the URL data comprise the device ID data; in particular in an unencrypted form. With the device ID data comprised in the URL data, forwarding the second data set to a suitable internet resource can be facilitated, in particular forwarding to an internet resource uniquely associated with the respective first device identified by the device ID data.

It can be provided that each first device (via a respective first data set) can specify - in full or merely in part - the internet resource to which its measurement data are transmitted.

In some embodiments, URL data are comprised in each of the first data sets. In other words, they are trivially / identically derived from the first data sets.

However, greater flexibility is provided, e.g., in embodiments in which only a portion of the URL data originates from the respective first data set. For example, the URL data can comprise the device ID data, and further data of the URL data are provided by the second device (not originating from the first data set), such as, e.g., data characterizing an internet domain, such as the internet domain of the server system.

Accordingly, in some embodients, the deriving of the URL data from the respective first data set comprises deriving merely a portion of the URL data, more particularly the device ID data, from the first data set. And, especially, another portion of the URL data comprises data characterizing an internet domain of the server system.

In this way, flexibility is gained, e.g., when it is decided that the second data sets shall be sent to a different internet domain, e.g., because the server system is moved there or because a new server system (at that different internet domain) shall receive the second data sets. Such changes can be accomplished without modifying the first devices, for example by merely modifying the second devices - which furthermore can be relatively simple, as the second device have internet connectivity.

Thus, in some embodiments, the method comprises that for each of the second data sets, the URL data comprised therein comprise device ID data identifying the respective first device, in particular wherein the method comprises, carried out by each of the second devices, deriving the respective URL data with the aid of the device ID data derived from the respective first data set, more particularly wherein the deriving comprises including the device ID data in the URL data.

When the device ID data uniquely identify the respective first device, it can be enabled, via the URL data, that second data sets originating from different first devices are always transmitted to different internet resources.

The invention can also comprise a first device which is a part of or can be used in the described system and/or which is a first device of use in the described method.

In particular, the first device can be a first device for monitoring one or more products, comprising first functional units, the first functional units comprising
- a first sensing unit comprising one or more sensors for sensing physical and/or environmental conditions to which the one or more products are assumed to be exposed;
- a first communication unit for communicating via a first communication network;

wherein the first device is configured
   - to generate measurement data comprising data related to the sensed physical and/or environmental conditions;
   - to transmit a first data set comprising the measurement data via the first communication network;
wherein the measurement data comprise first device ID data identifying, in particular uniquely identifying the first device, and wherein the measurement data are encrypted data and the generating the measurement data comprises carrying out an encryption step, and wherein the first data set in addition comprises, in an unencrypted form, second device ID data identifying, in particular uniquely identifying the respective first device.

The first and second device ID data can be identical.

In some embodiments of the first device, the first communication network is the only communication network via which the first device is able to communicate.

In some embodiments the first device is devoid of a capability to communicate via another communication network than the first communication network.

In some embodiments, the first device comprises a data output unit comprising a hardware connector, configured to enable an outputting of a copy of the first data set via the hardware connector. The data output unit and its functions have been described above in more detail.

The invention can also comprise a second device which is a part of or can be used in the described system and/or which is a second device of use in the described method.

In particular, the second device can be a second device for use in monitoring one or more products, comprising second functional units, the second functional units comprising
- a second communication unit for communicating via a first communication network and, in addition, for communicating via a second communication network;

wherein the second device is configured
   - to receive via the first communication network a first data set comprising
      - measurement data comprising data related to sensed physical and/or environmental conditions sensed by a first device and first device ID data identifying the first device, wherein the measurement data are encrypted data; and, in addition,
      - in an unencrypted form, second device ID data identifying the first device;
   - to derive from the so-received first data set a second data set;
wherein the deriving of the second data set comprises
   - generating URL data comprising uniform resource locator data identifying an internet resource, the URL data comprising the second device ID data or data derived therefrom;
the second data set comprising
   - the measurement data; and
   - the URL data;
wherein the second device is configured
- to transmit the second data set via the second communication network to the internet.

In particular, the second device can be configured
- to transmit the second data set via the second communication network to the internet resource identified by the URL data.

In particular, the second device can be configured to be devoid of means for modifying the measurement data; and more particularly the measurement data can be encrypted data (the second device being incapable of decrypting the measurement data).

As will have become clear from the above, there are further aspects to the invention besides the base aspect of, roughly speaking, providing two types of devices (first devices an second devices) and two different communication networks.

One aspect concerns the use of the device ID data (usually in unencrypted form in the second data sets) and, in instances, of its precursor data (usually in unencrypted form in the first data sets), respectively, in the deriving of the URL data. This makes possible that each first device can contribute in determining the internet resource to which the second data set (and in particular the measurement data) are transmitted, e.g., such that in instances they all are transmitted to a unique URL characteristic for the respective first device - and thus different from all URLs to which second data sets associated with other first devices are transmitted. This can greatly simplify data handling by the server system.

Another aspect concerns the encryption. In this regard, the transmission of the device ID data is remarkable (in particular its transmission in unencrypted form), as it is used (by the server application) for retrieving the decryption data for the decryption of the measurement data. A straight-forward end-to-end encryption can be accomplished this way, in particular with symmetric encryption.

Yet another aspect concerns the incapability of the second devices to modify the measurement data, such that it is close to impossible to use the second devices for tampering with the measuring data.

Still another aspect concerns the provision of at least two second devices and the capability of at least one of the first devices, to transmit the first data set to the one or the other of the second devices, depending on circumstances, making the method and system more robust, e.g., in case one of the second devices has a technical problem.

Finally, another aspect concerns the provision of a hardware-based interface at each first device, so that it is possible, via the data output unit, to access a copy of the measurement data (typically in encrypted form - at least in the very same form as usually transmitted via the first communication network) which makes the method and system more robust in case of technical problems, such as when internet access via the second communication network is (e.g., temporarily) impossible.

Of course, the aspects can be implemented separately, but also in combination, e.g., in a pairwise fashion, or also three or more of the aspects can be combined.

Note: When an item is described to be "configured" to carry out a step, this means that concrete measures have been taken which factually enable the item to carry out the step. For example, dedicated program code is implemented enabling the item to carrying out the step when the program code is executed. Thus, this does not include, e.g., the mere suitability to (possibly) make the item carry out the step, as may be the case for a computer without a dedicated program code.

As will be readily understood, features mentioned herein with respect to a method can analogously apply for a described apparatus (e.g., system; device) as well. And, vice versa, features mentioned herein with respect to an apparatus (e.g., system; device) can analogously apply for a described method as well. The achievable effects correspond to each other.

Accordingly, the invention comprises apparatuses (e.g., systems; devices) with features of corresponding methods according to the invention, and, vice versa, also methods with features of corresponding apparatuses (e.g., systems; devices) according to the invention.

Further embodiments and advantages emerge from the following description and the enclosed figures and from the dependent claims.

Below, the invention is described in more detail by means of examples and the included drawings. In the drawings, same reference numerals refer to same or analogous elements. The figures show schematically:
- Fig. 1: a schematic illustration of a system for monitoring a set of products;
- Fig. 2: another schematic illustration of a system for monitoring a set of products, highlighting a first and a second device of the system;
- Fig. 3: a schematic illustration of data transmission details and details of a decryption process.

The described embodiments are meant as examples or for clarifying the invention and shall not limit the invention.

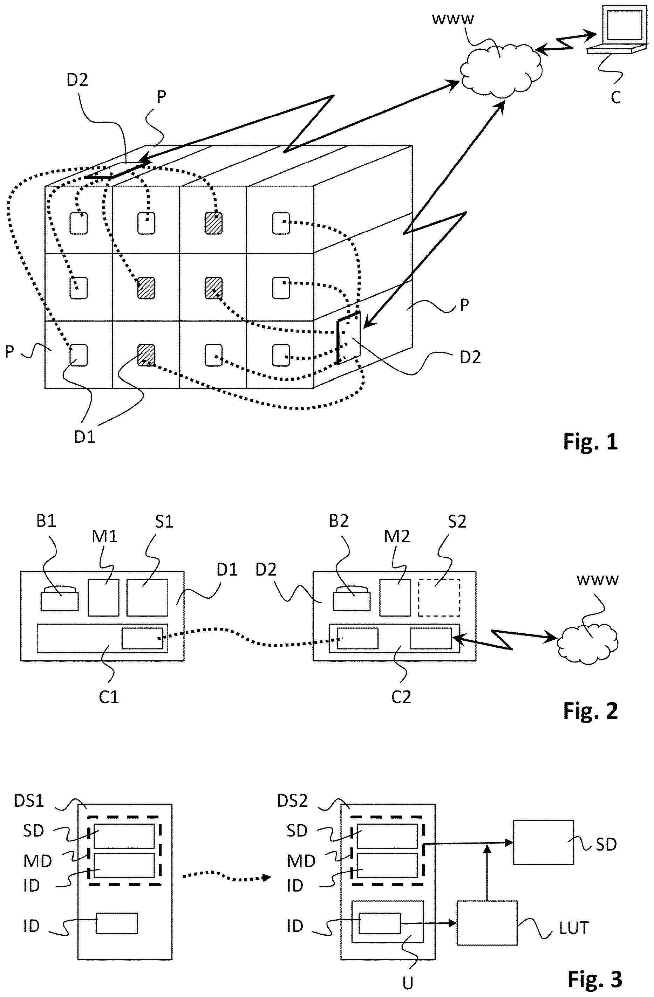

Fig. 1 shows a schematic illustration of a system for monitoring a set of products, and Fig. 2 shows another schematic illustration of a system for monitoring a set of products, e.g., of the system of Fig. 1, highlighting a first and a second device of the system. Some of the products are labelled P in Fig. 1. It is also possible that each of the items labelled P in Fig. 1 comprises one or more products, such as a subset of products, e.g., a plurality vials containing a vaccine.

The system comprises one or more first devices D1 and one or more second devices D2. In Fig. 1, twelve first devices D1 and two second devices D2 are shown. Each first device D1 can communicate with one or more associated ones of the second devices D2 using a first communication network, as symbolized by the dotted lines. For example, the hatched first devices D1 may be able to communicate with both second devices D2 (not specifically illustrated in Fig, 1), e.g., because they are located within a communication range of both these second devices D2. Provided the possibility that a specific first device D1 can communicate, in principle (unless, e.g., they are too far distant from one another), with any of the second devices D2, the communication is quite robust, as, e.g., in case of a malfunction of one of the second devices D2 or of the loss of the connection to the internet www of one of the second devices D2, the first device D1 still can communicate with another second device D2.

The first and second devices D1, D2 comprise communication units C1 and C2 respectively, both enabling communicating via the first communication network, such as using a "Bluetooth Low Energy" standard. The communication units C2 of the second devices enable communication using another communication network, providing a connection to the internet www, e.g., using a cellular communication network or a communication network according to a Wi-Fi standard. Each first device D1 can use one or more of the second devices D2 as a gateway to the internet www. In particular, the system can also comprise a server sytem C connected to the internet www, such that data from each first device D1 (or, rather, data derived therefrom) can be transmitted (via a second device D2) to the server system C.

The first and second devices D1, D2 can comprise an energy supply unit B1 and B2, respectively, such as a battery. In particular the energy supply unit B2 of the second devices D2 can comprise a rechargeable energy storage, such as a rechargeable battery.

The first and second devices D1, D2 can comprise storage units M1 and M2, respectively, for digital data storage, e.g., computer memory chips, and a digital processing unit such as a microprocessor which is not shown in the figures.

The first devices D1 comprise a sensing unit S1 each, for sensing physical and/or environmental conditions, such as a temperature, in particular when the products P to be monitored are temperature-sensitive products.

Optionally, the second devices D2 can comprise a sensing unit S2 each, for sensing physical and/or environmental conditions, such as a temperature, in particular when the products P to be monitored are temperature-sensitive products.

Referring now also to Fig. 3 showing a schematic illustration of data transmission details and details of a decryption process: Results of the sensing, e.g., comprised in measurement data MD can be transmitted to the internet www, e.g., for storing and processing, e.g., evaluating these, in particular using the server system C. Real-time monitoring can be achieved this way.

Each first device D1 can generate a first data set DS1 comprising device ID data uniquely identifying the respective first device D1 and measurement data MD which contain sensing data SD comprising data relating to or indicative of the sensing results, and optionally also time stamp data (not illustrated) indicative of the time of the sensing.

Each first device D1 can be configured such that this happens (and that also the transmission of the first data set DS1 happens, cf. below), e.g., each time after sensing results have been obtained, which usually is done repeatedly, e.g., periodically, such as every 10 min or every 6 hours, depending on the circumstances.

The measurement data MD can be encrypted and can also comprise the the device ID data ID, such that the device ID data ID can be comprised twice in the first data set DS1, once unencrypted and one encrypted. Accordingly, the first device D1 can, when generating the measurement data MD, carry out an encryption step, such as by application of digital key data.

The first device D1 (via the first communication network) transmits the first data set DS1 to a second device D2 which therefrom derives a second data set DS2. The encrypted measurement data MD remain unchanged by the second device D2 (which is unable to accomplish a decryption step and/or has no access to suitable digital key data), however, the second device can derive URL data U from the first data set DS1, more precisely from the unencrypted device ID data ID.

The URL data U comprise uniform resource locator data identifying an internet resource, such as an internet resource associated with the server system C. For example, the second device can contribute, to the uniform resource locator data, data which identify a domain of the server system C. The second device D2 can transmit (via the second communication network) the second data set DS2 to this internet resource.

Each of the first devices D2 can be configured such that this is accomplished each time after reception of a first data set DS1.

In the internet www, such as by server system C, the encrypted measurement data MD comprised in the second data set DS2 received from the second device D2 can be decrypted - namely by making use of the URL data U and more precisely based on the device ID data comprised therein.

Note: It is merely an option that the device ID data in the first data set DS1 and the second data set DS2 are identical. E.g., the second device could modify the received device ID data ID and include in the second data set DS2 the modified version of the received device ID data set ID. However, it is important that the respective first device D1 having sensed the physical and/or environmental conditions can be (unambiguously) identified based on the device ID data ID, e.g., by the server system C.

A suitable key (digital key data) for the decryption can be obtained, e.g., via a lookup-table LUT, e.g., associated with the server system C, based on the received device ID data ID. That key can be identical to the key used by the first device DS1 for the encrpytion.

Thus, by the decryption (of the measurement data MD), the sensing data SD (and also the formerly encrypted device ID data and the optional times stamp data) can be derived in an unencrypted form.

Further details an options have been described above.

As will have become clear, a relatively robust and secure way of handling and safeguarding sensitive data in the monitoring of products can be realized by the described methods and system.

Aspects of the embodiments have been described in terms of functional units. As is readily understood, unless otherwise specified, these functional units may be realized in virtually any number of hardware and/or software components adapted to performing the specified functions.

If not otherwise stated and unless logically impossible, the method's steps may be performed in any order (sequence) including simultaneous performance of steps.

## Claims

1. Method for monitoring a set of products (P), the method comprising
- providing one or more first devices (D1), each of the first devices (D1)
- being associated with a respective subset of the products (P); and
- comprising a first sensing unit (S1) comprising one or more sensors;
- providing one or more second devices (D2);
- by means of each of the first device (D1)s:
- sensing, by means of the respective one or more sensors, physical and/or environmental conditions to which the respective subset of products (P) is assumed to be exposed;
- generating respective measurement data (MD) comprising data related to the sensed physical and/or environmental conditions;
- transmitting a first data set (DS1) comprising the measurement data (MD) via a first communication network to one of the second devices (D2);
wherein the respective measurement data (MD) comprise respective first device ID data (ID) identifying, in particular uniquely identifying the respective first device (D1), and wherein the respective measurement data (MD) are encrypted data and the generating the respective measurement data (MD) comprises carrying out a respective encryption step, and wherein the respective first data set (DS1) in addition comprises, in an unencrypted form, respective second device ID data (ID) identifying, in particular uniquely identifying the respective first device (D1);
- each of the second devices (D2)
- receiving one or more of the first data sets (DS1) via the first communication network;
- deriving from the each of the so-received first data sets (DS1) a respective second data set (DS2); and
- transmitting each of the second data sets (DS2) via a second communication network to the internet (www).

2. The method according to claim 1, wherein generating the measurement data (MD) comprises carrying out an encryption step, and the measurement data (MD) are encrypted data, and wherein each of the second data sets (DS2) comprises, derived from the respective first data set (DS1), device ID data (ID) identifying the respective first device (D1), the method further comprising
- receiving each of the second data sets (DS2) by a server system (C) connected to the internet (www), a server application running on the server system (C); and
the server application, for each received second data set (DS2),
- retrieving, by the aid of the device ID data (ID) comprised in the respective second data set (DS2), decryption data; and
- decrypting the measurement data (MD) comprised in the second data set (DS2) by the aid of the decryption data; and
- storing, in particular on the server system (C), at least a portion of the decrypted measurement data (MD).

3. The method according to claim 1 or claim 2, wherein each of the second data sets (DS2) comprises, derived from the respective first data set (DS1), URL data (U) comprising uniform resource locator data identifying an internet resource, and wherein each of the second data sets (DS2) is transmitted, in particular by the respective second device (D2), to the internet resource identified by the URL data (U) comprised therein.

4. The method according to claim 3, wherein for each of the second data sets (DS2), the URL data (U) comprised therein comprise device ID data (ID) identifying the respective first device (D1), in particular wherein the method comprises, carried out by each of the second devices (D2), deriving the respective URL data (U) with the aid of the device ID data (ID) derived from the respective first data set (DS1), more particularly wherein the deriving comprises including the device ID data (ID) in the URL data (U).

5. Method for storing or for shipping a set of products (P), comprising monitoring the set of products (P) according to the method of one of claims 1 to 4.

6. A first device (D1) for monitoring one or more products (P), comprising first functional units, the first functional units comprising
- a first sensing unit (S1) comprising one or more sensors for sensing physical and/or environmental conditions to which the one or more products (P) are assumed to be exposed;
- a first communication unit (C1) for communicating via a first communication network;
wherein the first device (D1) is configured
- to generate measurement data (MD) comprising data related to the sensed physical and/or environmental conditions;
- to transmit a first data set (DS1) comprising the measurement data (MD) via the first communication network;
wherein the measurement data (MD) comprise first device ID data (ID) identifying, in particular uniquely identifying the first device (D1), and wherein the measurement data (MD) are encrypted data and the generating the measurement data (MD) comprises carrying out an encryption step, and wherein the first data set (DS1) in addition comprises, in an unencrypted form, second device ID data (ID) identifying, in particular uniquely identifying the respective first device (D1); in particular wherein the first device ID data (ID) are identical to the second device ID data (ID).

7. The first device (D1) according to claim 6, wherein one or both of:
- the first communication network is the only communication network via which - the first device (D1) is able to communicate;
- the first device (D1) is devoid of means for communicating via a TCP/IP protocol.

8. A second device (D2) for use in monitoring one or more products (P), comprising second functional units, the second functional units comprising
- a second communication unit (C2) for communicating via a first communication network and, in addition, for communicating via a second communication network;
wherein the second device (D2) is configured
- to receive via the first communication network a first data set (DS1) comprising
- measurement data (MD) comprising data related to sensed physical and/or environmental conditions sensed by a first device (D1) and first device ID data (ID) identifying the first device (D1), wherein the measurement data (MD) are encrypted data; and, in addition,
- in an unencrypted form, second device ID data (ID) identifying the first device (D1);
- to derive from the so-received first data set (DS1) a second data set (DS2); wherein the deriving of the second data set (DS2) comprises
- generating URL data (U) comprising uniform resource locator data identifying an internet resource, the URL data (U) comprising the second device ID data (ID) or data derived therefrom;
the second data set (DS2) comprising
- the measurement data (MD); and
- the URL data (U);
wherein the second device (D2) is configured
- to transmit the second data set (DS2) via the second communication network to the internet (www);
in particular
- to transmit the second data set (DS2) via the second communication network to the internet resource identified by the URL data (U);
in particular wherein the first device ID data (ID) are identical to the second device ID data (ID).

9. System for monitoring a set of products (P), the system comprising
- one or more first devices (D1), each of the first devices (D1) being associated with a respective subset of the products (P);
- one or more second devices (D2);
wherein each of the one or more first devices (D1) is a first device (D1) according to one of claims 6 to 7 and/or each of the one or more second devices (D2) is a second device (D2) according to claim 8 ;
each of the first devices (D1) comprising first functional units, the first functional units comprising
- a first sensing unit (S1) comprising one or more sensors for sensing physical and/or environmental conditions to which the respective subset of products (P) is assumed to be exposed;
- a first communication unit for communicating via a first communication network;
each of the second devices (D2) comprising one or more second functional units, the second functional units comprising
- a second communication unit (C2) for communicating via the first communication network and, in addition, for communicating via a second communication network;
wherein each of the first devices (D1) is configured
- to generate measurement data (MD) comprising data related to the sensed physical and/or environmental conditions;
- to transmit a first data set (DS1) comprising the measurement data (MD) via the first communication network;
wherein each of the second devices (D2) is configured
- to receive via the first communication network one or more of the first data sets (DS1) transmitted by respective ones of the first devices (D1) via the first communication network;
- to derive from the each of the so-received first data sets (DS1) a respective second data set (DS2); and
- to transmit each of the second data sets (DS2) via the second communication network to the internet (www).

10. The system according to claim 9, wherein each of the second data sets (DS2) comprises, derived from the respective first data set (DS1), device ID data (ID) identifying the respective first device (D1), in particular wherein the device ID data (ID) are comprised in the second data sets (DS2) in an unencrypted form, more particularly in both, in an unencrypted form and in an encrypted form.

11. The system according to claim 9 or 10, wherein generating the measurement data (MD) comprises carrying out an encryption step, and wherein the measurement data (MD) are encrypted data.

12. The system according to claim 10 AND claim 11, further comprising a server system (C) connected to the internet (www) and a server application running on the server system (C), wherein each of the second devices (D2) is configured such that the transmitting of the second data sets (DS2) via the second communication network to the internet (www) comprises
- transmitting the second data sets (DS2) via the second communication network to the server system (C); and
wherein, the server system (C) is configured
- to receive each of the second data sets (DS2) from each of the second devices (D2); and
wherein the server application is configured, for each of the received second data sets (DS2),
- to retrieve, by the aid of the device ID data (ID) comprised in the second data set (DS2), decryption data;
- to decrypt the measurement data (MD) comprised in the second data set (DS2) using the decryption data; and
- to store, in particular on the server system (C), at least a portion of the decrypted measurement data (MD).

13. The system according to one of claims 9 to 12, wherein each of the second data sets (DS2) comprises, derived from the respective first data set (DS1), URL data (U) comprising uniform resource locator data identifying an internet resource, and wherein each of the second devices (D2) is configured such that the transmitting of the second data sets (DS2) via the second communication network to the internet (www) comprises
- transmitting each of the second data sets (DS2) to the internet resource identified by the URL data (U) comprised in the respective second data set (DS2).

14. Shipping unit comprising the system according to one of claims 9 to 13, further comprising the set of products (P), in particular wherein each of the first devices (D1) is positioned in proximity to the products (P) of the associated subset.

15. Stock comprising the system according to one of claims 9 to 13, further comprising a set of products (P), in particular wherein each of the first devices (D1) is positioned in proximity to the products (P) of the associated subset.

## Patentansprüche

1. Verfahren zur Überwachung einer Produktmenge (P), wobei das Verfahren
- Bereitstellen eines oder mehrerer ersten Geräte (D1), wobei jedes der ersten Geräte (D1)
- einer jeweiligen Teilmenge der Produkte (P) zugeordnet sind; und
- umfassend eine erste Erfassungseinheit (S1), die einen oder mehrere Sensoren umfasst;
- Bereitstellen eines oder mehrerer zweiten Geräte (D2);
- mittels jedes der ersten Geräte (D1):
- Erfassen von physikalischen und/oder Umweltbedingungen, denen die jeweilige Teilmenge von Produkten (P) vermutlich ausgesetzt ist, mittels des oder der jeweiligen Sensoren;
- Erzeugen entsprechender Messdaten (MD), die Daten umfassen, die sich auf die erfassten physikalischen und/oder Umweltbedingungen beziehen;
- Übertragen eines ersten Datensatzes (DS1), der die Messdaten (MD) umfasst, über ein erstes Kommunikationsnetzwerk an eines der zweiten Geräte (D2);
wobei die jeweiligen Messdaten (MD) jeweilige erste Gerätekennungsdaten (ID) umfassen, die das jeweilige erste Gerät (D1) identifizieren, insbesondere eindeutig identifizieren, und wobei die jeweiligen Messdaten (MD) verschlüsselte Daten sind und das Erzeugen der jeweiligen Messdaten (MD) das Durchführen eines jeweiligen Verschlüsselungsschritts umfasst, und wobei der jeweilige erste Datensatz (DS1) zudem jeweilige zweite Gerätekennungsdaten (ID) in unverschlüsselter Form umfasst, die das jeweilige erste Gerät (D1) identifizieren, insbesondere eindeutig identifizieren;
- jedes der zweiten Geräte (D2)
- Empfangen eines oder mehrerer der ersten Datensätze (DS1) über das erste Kommunikationsnetzwerk;
- Ableiten eines jeweiligen zweiten Datensatzes (DS2) aus jedem der so empfangenen ersten Datensätze (DS1); und
- Übertragen jedes der zweiten Datensätze (DS2) über ein zweites Kommunikationsnetzwerk an das Internet (www).

2. Verfahren nach Anspruch 1, wobei das Erzeugen der Messdaten (MD) die Durchführung eines Verschlüsselungsschritts umfasst und die Messdaten (MD) verschlüsselte Daten sind, und wobei jeder der zweiten Datensätze (DS2) aus dem jeweiligen ersten Datensatz (DS1) abgeleitete Geräte-ID-Daten (ID) umfasst, die das jeweilige erste Gerät (D1) identifizieren, wobei das Verfahren ferner umfasst
- Empfangen jedes der zweiten Datensätze (DS2) durch ein mit dem Internet (www) verbundenes Serversystem (C), wobei eine Serveranwendung auf dem Serversystem (C) ausgeführt wird; und die Server-Anwendung für jeden empfangenen zweiten Datensatz (DS2),
- Abrufen von Entschlüsselungsdaten mit Hilfe der im jeweiligen zweiten Datensatz (DS2) enthaltenen Gerätekennungsdaten (ID); und
- Entschlüsseln der im zweiten Datensatz (DS2) enthaltenen Messdaten (MD) mit Hilfe der Entschlüsselungsdaten; und Speichern, insbesondere auf dem Serversystem (C), zumindest eines Teils der entschlüsselten Messdaten (MD).

3. Verfahren nach Anspruch 1 oder 2, wobei jeder der zweiten Datensätze (DS2) aus dem jeweiligen ersten Datensatz (DS1) abgeleitete URL-Daten (U) umfasst, die Uniform Resource Locator-Daten umfassen, die eine Internetressource identifizieren, und wobei jeder der zweiten Datensätze (DS2), insbesondere vom jeweiligen zweiten Gerät (D2), an die durch die darin enthaltenen URL-Daten (U) identifizierte Internetressource übermittelt wird.

4. Verfahren nach Anspruch 3, wobei für jeden der zweiten Datensätze (DS2) die darin enthaltenen URL-Daten (U) Geräte-ID-Daten (ID) umfassen, die das jeweilige erste Gerät (D1) identifizieren, insbesondere wobei das Verfahren das Ableiten der jeweiligen URL-Daten (U) durch jedes der zweiten Geräte (D2) mit Hilfe der aus dem jeweiligen ersten Datensatz (DS1) abgeleiteten Geräte-ID-Daten (ID) umfasst, insbesondere wobei das Ableiten das Einbeziehen der Geräte-ID-Daten (ID) in die URL-Daten (U) umfasst.

5. Verfahren zum Lagern oder zum Versenden einer Produktmenge (P), umfassend das Überwachen der Produktmenge (P) gemäß dem Verfahren eines der Ansprüche 1 bis 4.

6. Eine erste Vorrichtung (D1) zur Überwachung eines oder mehrerer Produkte (P), die erste Funktionseinheiten umfasst, wobei die ersten Funktionseinheiten umfassen
- eine erste Erfassungseinheit (S1), die einen oder mehrere Sensoren zum Erfassen physikalischer und/oder Umweltbedingungen umfasst, denen das eine oder die mehreren Produkte (P) vermutlich ausgesetzt sind;
- eine erste Kommunikationseinheit (C1) zum Kommunizieren über ein erstes Kommunikationsnetzwerk;
wobei das erste Gerät (D1) konfiguriert ist
- zu erzeugen entsprechender Messdaten (MD), die Daten umfassen, die sich auf die erfassten physikalischen und/oder Umweltbedingungen beziehen;
- einen ersten Datensatz (DS1), der die Messdaten (MD) umfasst, über das erste Kommunikationsnetzwerk zu übertragen;
wobei die Messdaten (MD) erste, das erste Gerät (D1) identifizierende, insbesondere eindeutig identifizierende Geräteidentifikationsdaten (ID) umfassen, und wobei die Messdaten (MD) verschlüsselt sind und das Erzeugen der Messdaten (MD) die Durchführung eines Verschlüsselungsschritts umfasst, und wobei der erste Datensatz (DS1) zudem in unverschlüsselter Form zweite, das jeweilige erste Gerät (D1) identifizierende, insbesondere eindeutig identifizierende Geräteidentifikationsdaten (ID) umfasst; insbesondere wobei die ersten Geräteidentifikationsdaten (ID) mit den zweiten Geräteidentifikationsdaten (ID) identisch sind.

7. Die erste Vorrichtung (D1) gemäß Anspruch 6, wobei eines oder beide der folgenden Elemente vorhanden sind:
- das erste Kommunikationsnetz das einzige Kommunikationsnetz ist, über das - das erste Gerät (D1) kommunizieren kann;
- Das erste Gerät (D1) verfügt nicht über die Möglichkeit, über ein TCP/IP-Protokoll zu kommunizieren.

8. Eine zweite Vorrichtung (D2) zur Überwachung eines oder mehrerer Produkte (P), die zweite Funktionseinheiten umfasst, wobei die zweiten Funktionseinheiten
- eine zweite Kommunikationseinheit (C2) zur Kommunikation über ein erstes Kommunikationsnetz und zusätzlich zur Kommunikation über ein zweites Kommunikationsnetz;
wobei die zweite Vorrichtung (D2) konfiguriert ist
- über das erste Kommunikationsnetz einen ersten Datensatz (DS1) zu empfangen, der umfasst
- Messdaten (MD), die Daten zu erfassten physikalischen und/oder Umweltbedingungen umfassen, die von einem ersten Gerät (D1) erfasst wurden, und erste Geräte-ID-Daten (ID), die das erste Gerät (D1) identifizieren, wobei die Messdaten (MD) verschlüsselte Daten sind; und zusätzlich
in unverschlüsselter Form zweite Gerätekennungsdaten (ID), die das erste Gerät (D1) identifizieren;
- aus dem so empfangenen ersten Datensatz (DS1) einen zweiten Datensatz (DS2) abzuleiten;
wobei das Ableiten des zweiten Datensatzes (DS2) umfasst
- Generieren von URL-Daten (U), die Uniform Resource Locator-Daten umfassen, die eine Internetressource identifizieren, wobei die URL-Daten (U) die zweiten Geräte-ID-Daten (ID) oder davon abgeleitete Daten umfassen;
der zweite Datensatz (DS2) umfasst
- die Messdaten (MD); und
- die URL-Daten (U);
wobei die zweite Vorrichtung (D2) konfiguriert ist
- den zweiten Datensatz (DS2) über das zweite Kommunikationsnetz ins Internet (www) zu übertragen;
insbesondere
- den zweiten Datensatz (DS2) über das zweite Kommunikationsnetzwerk an die durch die URL-Daten (U) identifizierte Internetressource zu übertragen;
insbesondere wobei die ersten Gerätekennungsdaten (ID) identisch mit den zweiten Gerätekennungsdaten (ID) sind.

9. System zur Überwachung einer Produktmenge (P), umfassend
- ein oder mehrere erste Geräte (D1), wobei jedes der ersten Geräte (D1) einer jeweiligen Teilmenge der Produkte (P) zugeordnet ist;
- ein oder mehrere zweite Geräte (D2);
wobei jedes der einen oder mehreren ersten Geräte (D1) ein erstes Gerät (D1) gemäß einem der Ansprüche 6 bis 7 ist und/oder jedes der einen oder mehreren zweiten Geräte (D2) ein zweites Gerät (D2) gemäß Anspruch 8 ist;
jedes der ersten Geräte (D1) erste Funktionseinheiten umfasst, wobei die ersten Funktionseinheiten umfassen
- eine erste Erfassungseinheit (S1), die einen oder mehrere Sensoren zum Erfassen physikalischer und/oder Umweltbedingungen umfasst, denen das eine oder die mehreren Produkte (P) vermutlich ausgesetzt sind;
- eine erste Kommunikationseinheit (C1) zum Kommunizieren über ein erstes Kommunikationsnetzwerk;
wobei jedes der zweiten Geräte (D2) eine oder mehrere zweite Funktionseinheiten umfasst, wobei die zweiten Funktionseinheiten umfassen
- eine zweite Kommunikationseinheit (C2) zur Kommunikation über ein erstes Kommunikationsnetz und zusätzlich zur Kommunikation über ein zweites Kommunikationsnetz;
wobei jedes der ersten Geräte (D1) konfiguriert ist
- Erzeugen entsprechender Messdaten (MD), die Daten umfassen, die sich auf die erfassten physikalischen und/oder Umweltbedingungen beziehen;
- einen ersten Datensatz (DS1), der die Messdaten (MD) umfasst, über das erste Kommunikationsnetzwerk zu übertragen;
wobei jedes der zweiten Geräte (D2) konfiguriert ist
- um über das erste Kommunikationsnetzwerk einen oder mehrere der ersten Datensätze (DS1) zu empfangen, die von jeweiligen der ersten Geräte (D1) über das erste Kommunikationsnetzwerk übertragen werden;
- Ableiten eines jeweiligen zweiten Datensatzes (DS2) aus jedem der so empfangenen ersten Datensätze (DS1); und
- jeden der zweiten Datensätze (DS2) über das zweite Kommunikationsnetz ins Internet (www) zu übertragen.

10. Das System gemäß Anspruch 9, wobei jeder der zweiten Datensätze (DS2) aus dem jeweiligen ersten Datensatz (DS1) abgeleitete Gerätekennungsdaten (ID) umfasst, die das jeweilige erste Gerät (D1) identifizieren, insbesondere wobei die Gerätekennungsdaten (ID) in den zweiten Datensätzen (DS2) in unverschlüsselter Form, insbesondere sowohl in unverschlüsselter als auch in verschlüsselter Form, enthalten sind.

11. Das System gemäß Anspruch 9 oder 10, wobei das Erzeugen der Messdaten (MD) das Durchführen eines Verschlüsselungsschritts umfasst und wobei die Messdaten (MD) verschlüsselte Daten sind.

12. Das System gemäß Anspruch 10 UND Anspruch 11, das weiterhin ein Serversystem (C) umfasst, das mit dem Internet (www) verbunden ist, und eine Serveranwendung, die auf dem Serversystem (C) läuft, wobei jedes der zweiten Geräte (D2) so konfiguriert ist, dass die Übertragung der zweiten Datensätze (DS2) über das zweite Kommunikationsnetzwerk an das Internet (www) umfasst
- Übertragen der zweiten Datensätze (DS2) über das zweite Kommunikationsnetzwerk an das Serversystem (C); und
wobei das Serversystem (C) konfiguriert ist
- um jeden der zweiten Datensätze (DS2) von jedem der zweiten Geräte (D2) zu empfangen; und
wobei die Server-Anwendung für jeden der empfangenen zweiten Datensätze (DS2) konfiguriert ist,
- Abrufen von Entschlüsselungsdaten mit Hilfe der im jeweiligen zweiten Datensatz (DS2) enthaltenen Gerätekennungsdaten (ID); und
- Entschlüsseln der im zweiten Datensatz (DS2) enthaltenen Messdaten (MD) mit Hilfe der Entschlüsselungsdaten; und
- Speichern, insbesondere auf dem Serversystem (C), zumindest eines Teils der entschlüsselten Messdaten (MD).

13. Das System gemäß einem der Ansprüche 9 bis 12, wobei jeder der zweiten Datensätze (DS2) aus dem jeweiligen ersten Datensatz (DS1) abgeleitete URL-Daten (U) umfasst, die Uniform Resource Locator-Daten umfassen, die eine Internetressource identifizieren, und wobei jedes der zweiten Geräte (D2) so konfiguriert ist, dass die Übertragung der zweiten Datensätze (DS2) über das zweite Kommunikationsnetzwerk an das Internet (www) Folgendes umfasst
- Übertragen jedes der zweiten Datensätze (DS2) an die Internetressource, die durch die im jeweiligen zweiten Datensatz (DS2) enthaltenen URL-Daten (U) identifiziert wird.

14. Versandeinheit umfassend das System nach einem der Ansprüche 9 bis 13, weiterhin umfassend die Menge an Produkten (P), insbesondere wobei jedes der ersten Geräte (D1) in der Nähe der Produkte (P) der zugehörigen Teilmenge positioniert ist.

15. Lagerbestand umfassend das System nach einem der Ansprüche 9 bis 13, weiterhin umfassend eine Menge an Produkten (P), insbesondere wobei jedes der ersten Geräte (D1) in der Nähe der Produkte (P) der zugehörigen Teilmenge positioniert ist.

## Revendications

1. Procédé de surveillance d'un ensemble de produits (P), le procédé comprenant
- la fourniture d'un ou de plusieurs premiers dispositifs (D1), chacun des premiers dispositifs (D1)
- étant associé à un sous-ensemble respectif des produits (P) ; et
- comprenant une première unité de détection (S1) comprenant un ou plusieurs capteurs ;
- la fourniture d'un ou de plusieurs seconds dispositifs (D2) ;
- au moyen de chacun des premiers dispositifs (D1) :
- la détection, au moyen des un ou plusieurs capteurs respectifs, des conditions physiques et/ou environnementales auxquelles le sous-ensemble respectif de produits (P) est supposé être exposé ;
- la génération de données de mesure respectives (MD) comprenant des données liées aux conditions physiques et/ou environnementales détectées ;
- la transmission d'un premier ensemble de données (DS1) comprenant les données de mesure (MD) par l'intermédiaire d'un premier réseau de communication à l'un des seconds dispositifs (D2) ;
dans lequel les données de mesure respectives (MD) comprennent des premières données d'identification de dispositif (ID) respectives identifiant, en particulier identifiant de manière unique, le premier dispositif respectif (D1), et dans lequel les données de mesure respectives (MD) sont des données cryptées et la génération des données de mesure respectives (MD) comprend la réalisation d'une étape de cryptage respective, et dans lequel le premier ensemble de données respectif (DS1) comprend également, sous une forme non cryptée, des secondes données d'identification de dispositif (ID) respectives identifiant, en particulier identifiant de manière unique, le premier dispositif respectif (D1) ;
- chacun des seconds dispositifs (D2)
- recevant l'un ou plusieurs des premiers ensembles de données (DS1) par l'intermédiaire du premier réseau de communication ;
- dérivant, de chacun des premiers ensembles de données (DS1) ainsi reçus, un second ensemble de données respectif (DS2) ; et
- transmettant chacun des seconds ensembles de données (DS2) par l'intermédiaire d'un second réseau de communication vers Internet (www).

2. Procédé selon la revendication 1, dans lequel la génération des données de mesure (MD) comprend la réalisation d'une étape de cryptage, et les données de mesure (MD) sont des données cryptées, et dans lequel chacun des seconds ensembles de données (DS2) comprend, dérivées du premier ensemble de données respectif (DS1), des données d'identification de dispositif (ID) identifiant le premier dispositif respectif (D1), le procédé comprenant également
- la réception de chacun des seconds ensembles de données (DS2) par un système serveur (C) connecté à internet (www), une application serveur exécutée sur le système serveur (C) ; et l'application serveur, pour chaque second ensemble de données reçu (DS2),
- la récupération, à l'aide des données d'identification de dispositif (ID) comprises dans le second ensemble de données respectif (DS2), de données de décryptage ; et
- le décryptage des données de mesure (MD) comprises dans le second ensemble de données (DS2) à l'aide des données de décryptage ; et
- le stockage, notamment sur le système serveur (C), d'au moins une partie des données de mesure décryptées (MD).

3. Procédé selon la revendication 1 ou la revendication 2, dans lequel chacun des seconds ensembles de données (DS2) comprend, dérivées du premier ensemble de données respectif (DS1), des données URL (U) comprenant des données de localisateur de ressources uniformes identifiant une ressource internet, et dans lequel chacun des seconds ensembles de données (DS2) est transmis, en particulier par le second dispositif respectif (D2), à la ressource internet identifiée par les données URL (U) qu'il contient.

4. Procédé selon la revendication 3, dans lequel, pour chacun des seconds ensembles de données (DS2), les données URL (U) qu'il contient comprennent des données d'identification de dispositif (ID) identifiant le premier dispositif respectif (D1), en particulier dans lequel le procédé comprend, mise en œuvre par chacun des seconds dispositifs (D2), la dérivation des données URL respectives (U) à l'aide des données d'identification de dispositif (ID) dérivées du premier ensemble de données respectif (DS1), plus particulièrement dans lequel la dérivation comprend l'inclusion des données d'identification de dispositif (ID) dans les données URL (U).

5. Procédé de stockage ou d'expédition d'un ensemble de produits (P), comprenant la surveillance de l'ensemble de produits (P) selon le procédé de l'une des revendications 1 à 4.

6. Premier dispositif (D1) de surveillance d'un ou de plusieurs produits (P), comprenant des premières unités fonctionnelles, les premières unités fonctionnelles comprenant
- une première unité de détection (S1) comprenant un ou plusieurs capteurs pour détecter les conditions physiques et/ou environnementales auxquelles les un ou plusieurs produits (P) sont supposés être exposés ;
- une première unité de communication (C1) pour communiquer par l'intermédiaire d'un premier réseau de communication ; dans lequel le premier dispositif (D1) est configuré
- pour générer des données de mesure respectives (MD) comprenant des données liées aux conditions physiques et/ou environnementales détectées ;
- pour transmettre un premier ensemble de données (DS1) comprenant les données de mesure (MD) par l'intermédiaire du premier réseau de communication ;
dans lequel les données de mesure (MD) comprennent des premières données d'identification de dispositif (ID) identifiant, en particulier identifiant de manière unique, le premier dispositif (D1), et dans lequel les données de mesure (MD) sont des données cryptées et la génération des données de mesure (MD) comprend la réalisation d'une étape de cryptage, et dans lequel le premier ensemble de données (DS1) comprend également, sous une forme non cryptée, des secondes données d'identification de dispositif (ID) identifiant, en particulier identifiant de manière unique, le premier dispositif respectif (D1) ; en particulier dans lequel les premières données d'identification de dispositif (ID) sont identiques aux secondes données d'identification de dispositif (ID).

7. Premier dispositif (D1) selon la revendication 6, dans lequel s'applique l'un ou les deux faits suivants :
- le premier réseau de communication est le seul réseau de communication par l'intermédiaire duquel - le premier dispositif (D1) est capable de communiquer ;
- le premier dispositif (D1) est dépourvu de moyens de communication par l'intermédiaire d'un protocole TCP/IP.

8. Second dispositif (D2) destiné à être utilisé pour surveiller un ou plusieurs produits (P), comprenant des secondes unités fonctionnelles, les secondes unités fonctionnelles comprenant
- une seconde unité de communication (C2) pour communiquer par l'intermédiaire d'un premier réseau de communication et, également, pour communiquer par l'intermédiaire d'un second réseau de communication ;
dans lequel le second dispositif (D2) est configuré
- pour recevoir, par l'intermédiaire du premier réseau de communication, un premier ensemble de données (DS1) comprenant
- des données de mesure (MD) comprenant des données relatives aux conditions physiques et/ou environnementales détectées par un premier dispositif (D1) et des premières données d'identification de dispositif (ID) identifiant le premier dispositif (D1), dans lequel les données de mesure (MD) sont des données cryptées ; et, également,
- sous une forme non cryptée, des secondes données d'identification de dispositif (ID) identifiant le premier dispositif (D1) ;
- pour dériver du premier ensemble de données (DS1) ainsi reçu un second ensemble de données (DS2) ;
dans lequel la dérivation du second ensemble de données (DS2) comprend
- la génération de données URL (U) comprenant des données de localisateur de ressources uniformes identifiant une ressource internet, les données URL (U) comprenant les secondes données d'identification de dispositif (ID) ou des données dérivées de celles-ci ;
le second ensemble de données (DS2) comprenant
- les données de mesure (MD) ; et
- les données URL (U) ;
dans lequel le second dispositif (D2) est configuré
- pour transmettre le second ensemble de données (DS2) par l'intermédiaire du second réseau de communication vers internet (www) ;
en particulier
- pour transmettre le second ensemble de données (DS2) par l'intermédiaire du second réseau de communication à la ressource internet identifiée par les données URL (U) ;
en particulier dans lequel les premières données d'identification de dispositif (ID) sont identiques aux secondes données d'identification de dispositif (ID).

9. Système de surveillance d'un ensemble de produits (P), le système comprenant
- un ou plusieurs premiers dispositifs (D1), chacun des premiers dispositifs (D1) étant associé à un sous-ensemble respectif des produits (P) ;
- un ou plusieurs seconds dispositifs (D2) ;
dans lequel chacun des un ou plusieurs premiers dispositifs (D1) est un premier dispositif (D1) selon l'une des revendications 6 à 7 et/ou chacun des un ou plusieurs seconds dispositifs (D2) est un second dispositif (D2) selon la revendication 8 ;
chacun des premiers dispositifs (D1) comprenant des premières unités fonctionnelles, les premières unités fonctionnelles comprenant
- une première unité de détection (S1) comprenant un ou plusieurs capteurs pour détecter les conditions physiques et/ou environnementales auxquelles le sous-ensemble respectif de produits (P) est supposé être exposé ;
- une première unité de communication (C1) pour communiquer par l'intermédiaire d'un premier réseau de communication ;
chacun des seconds dispositifs (D2) comprenant une ou plusieurs secondes unités fonctionnelles, les secondes unités fonctionnelles comprenant
- une seconde unité de communication (C2) pour communiquer par l'intermédiaire du premier réseau de communication et, également, pour communiquer par l'intermédiaire d'un second réseau de communication ;
dans lequel chacun des premiers dispositifs (D1) est configuré
- pour générer des données de mesure respectives (MD) comprenant des données liées aux conditions physiques et/ou environnementales détectées ;
- pour transmettre un premier ensemble de données (DS1) comprenant les données de mesure (MD) par l'intermédiaire du premier réseau de communication ;
dans lequel le second dispositif (D2) est configuré
- pour recevoir, par l'intermédiaire du premier réseau de communication, l'un ou plusieurs des premiers ensembles de données (DS1) transmis par les premiers dispositifs respectifs (D1) par l'intermédiaire du premier réseau de communication ;
- pour dériver, de chacun des premiers ensembles de données (DS1) ainsi reçus, un second ensemble de données respectif (DS2) ; et
- pour transmettre chacun des seconds ensembles de données (DS2) par l'intermédiaire du second réseau de communication vers Internet (www).

10. Système selon la revendication 9, dans lequel chacun des seconds ensembles de données (DS2) comprend, dérivées du premier ensemble de données respectif (DS1), des données d'identification de dispositif (ID) identifiant le premier dispositif respectif (D1), en particulier dans lequel les données d'identification de dispositif (ID) sont comprises dans les seconds ensembles de données (DS2) sous une forme non cryptée, plus particulièrement à la fois sous une forme non cryptée et sous une forme cryptée.

11. Système selon la revendication 9 ou 10, dans lequel la génération des données de mesure (MD) comprend la réalisation d'une étape de cryptage, et dans lequel les données de mesure (MD) sont des données cryptées.

12. Système selon la revendication 10 ET la revendication 11, comprenant également un système serveur (C) connecté à Internet (www) et une application serveur exécutée sur le système serveur (C), dans lequel chacun des seconds dispositifs (D2) est configuré de sorte que la transmission des seconds ensembles de données (DS2) par l'intermédiaire du second réseau de communication vers Internet (www) comprend
- la transmission des seconds ensembles de données (DS2) par l'intermédiaire du second réseau de communication au système serveur (C) ; et
dans lequel le système serveur (C) est configuré
- pour recevoir chacun des seconds ensembles de données (DS2) de chacun des seconds dispositifs (D2) ; et
dans lequel l'application serveur est configurée, pour chacun des seconds ensembles de données reçus (DS2),
- pour récupérer, à l'aide des données d'identification de dispositif (ID) comprises dans le second ensemble de données (DS2), des données de décryptage ; et
- pour décrypter les données de mesure (MD) comprises dans le second ensemble de données (DS2) à l'aide des données de décryptage ; et
- pour stocker, notamment sur le système serveur (C), au moins une partie des données de mesure décryptées (MD).

13. Système selon l'une des revendications 9 à 12, dans lequel chacun des seconds ensembles de données (DS2) comprend, dérivées du premier ensemble de données respectif (DS1), des données URL (U) comprenant des données de localisateur de ressources uniformes identifiant une ressource internet, et dans lequel chacun des seconds dispositifs (D2) est configuré de sorte que la transmission des seconds ensembles de données (DS2) par l'intermédiaire du second réseau de communication vers Internet (www) comprend
- la transmission de chacun des seconds ensembles de données (DS2) à la ressource internet identifiée par les données URL (U) comprises dans le second ensemble de données respectif (DS2).

14. Unité d'expédition comprenant le système selon l'une des revendications 9 à 13, comprenant également l'ensemble de produits (P), en particulier dans laquelle chacun des premiers dispositifs (D1) est positionné à proximité des produits (P) du sous-ensemble associé.

15. Stock comprenant le système selon l'une des revendications 9 à 13, comprenant également un ensemble de produits (P), en particulier dans lequel chacun des premiers dispositifs (D1) est positionné à proximité des produits (P) du sous-ensemble associé.
